# EUROPEAN PATENT APPLICATION

(11) **EP 4 686 185 A1**
(43) Date of publication of application: **28.01.2026**
(21) Application number: 25152336.1
(22) Date of filing: 16.01.2025
(51) Int. Cl.: H04N 1/00, H04N 1/32

(54) **INFORMATION PROCESSING SYSTEM, PROGRAM, AND INFORMATION PROCESSING METHOD**

(30) Priority: 25.07.2024 JP 2024120256
(71) Applicant: FUJIFILM Business Innovation Corp., Minato-ku Tokyo (JP)
(72) Inventor: FUJI, Toshio, Yokohama-shi, Kanagawa (JP)
(74) Representative: Kurig, Thomas

(57) **Abstract**

An information processing system includes: a processor configured to: set, in a case where instruction information for providing an instruction to set an output destination of received data to any one of printing using a printing apparatus or upload to an external device is included in received fax data, the output destination of the data received from an outside according to the instruction provided by the instruction information.

## Description

### BACKGROUND OF THE INVENTION

### (i) Field of the Invention

The present disclosure relates to an information processing system, a program, and an information processing method.

### (ii) Description of Related Art

JP2009-060211A discloses a facsimile apparatus in which it is possible to easily perform changing, addition, or the like of a reception notification destination and a reception image data transfer destination even after returning home or going out, and security is also ensured.

### SUMMARY OF THE INVENTION

In an information processing system such as an image forming apparatus, a configuration is proposed in which it is possible to choose whether to print data received from an outside or upload the data to the cloud according to a setting set by a user.

With the configuration as above, in a case where the received data is set to be uploaded to the cloud, for example, in a case where a fax is received in an image forming apparatus installed in a company, the user can check the content of the fax from an outside of the company via the cloud.

However, in a case where the user goes out in a state where the received data is set to be printed, the user cannot check the content of the fax from the outside of the company via the cloud. There is a problem in security in that access from the outside of the company to the image forming apparatus installed in the company is received and the setting of the image forming apparatus can be remotely changed from the outside of the company.

An object of the present disclosure is to provide an information processing system, a program, and an information processing method with which it is possible to remotely change an output destination of received data.

According to a first aspect of the present disclosure, there is provided an information processing system including: a processor configured to: set, in a case where instruction information for providing an instruction to set an output destination of received data to any one of printing using a printing apparatus or upload to an external device is included in received fax data, the output destination of the data received from an outside according to the instruction provided by the instruction information.

According to a second aspect of the present disclosure, in the information processing system according to the first aspect, the processor may be configured to: validate only instruction information included in fax data received from a transmission source registered in advance.

According to a third aspect of the present disclosure, in the information processing system according to the second aspect, the processor may be configured to: set the output destination of the data received from the outside according to an instruction provided by the instruction information included in the fax data received from the transmission source registered in advance; and notify the transmission source of a setting result.

According to a fourth aspect of the present disclosure, in the information processing system according to any one of the first to third aspects, the instruction information may be included in the fax data as an image.

According to a fifth aspect of the present disclosure, in the information processing system according to the fourth aspect, the instruction information may be included in the fax data as a one-dimensional code image or a two-dimensional code image.

According to a sixth aspect of the present disclosure, in the information processing system according to the fourth aspect, the instruction information may be included in the fax data as a text image.

According to a seventh aspect of the present disclosure, there is provided a program that causes a computer to execute a step of: setting, in a case where instruction information for providing an instruction to set an output destination of received data to any one of printing using a printing apparatus or upload to an external device is included in received fax data, the output destination of the data received from an outside according to the instruction provided by the instruction information.

According to an eighth aspect of the present disclosure, there is provided an information processing method including: setting, in a case where instruction information for providing an instruction to set an output destination of received data to any one of printing using a printing apparatus or upload to an external device is included in received fax data, the output destination of the data received from an outside according to the instruction provided by the instruction information.

With the information processing system according to the first aspect of the present disclosure, it is possible to remotely change the output destination of the received data.

With the information processing system according to the second aspect of the present disclosure, it is possible only for a permitted user to change the output destination of the data.

With the information processing system according to the third aspect of the present disclosure, it is possible to notify the user, who provides the instruction for the setting, of the setting result.

With the information processing system according to the fourth aspect of the present disclosure, it is possible to change the output destination of the data by using a general fax.

With the information processing system according to the fifth aspect of the present disclosure, it is possible to change the output destination of the data by using the one-dimensional code image or the two-dimensional code image.

With the information processing system according to the sixth aspect of the present disclosure, it is possible to change the output destination of the data by using the text image.

With the program according to the seventh aspect of the present disclosure, it is possible to remotely change the output destination of the received data.

With the information processing method according to the eighth aspect of the present disclosure, it is possible to remotely change the output destination of the received data.

### BRIEF DESCRIPTION OF THE DRAWINGS

Exemplary embodiment(s) of the present invention will be described in detail based on the following figures, wherein:
Fig. 1 is a diagram showing a system configuration of a fax sorting system according to an exemplary embodiment of the present disclosure;
Fig. 2 is a block diagram showing a hardware configuration of an image forming apparatus in the fax sorting system;
Fig. 3 is a diagram for describing a flow of processing in a case of fax reception in the fax sorting system;
Fig. 4 is a diagram for describing a flow of the processing in a case of the fax reception in the fax sorting system;
Fig. 5 is a diagram for describing a flow of the processing in a case of the fax reception in the fax sorting system; and
Fig. 6 is a diagram for describing a flow of processing in a case of fax reception in the image forming apparatus.

### DETAILED DESCRIPTION OF THE INVENTION

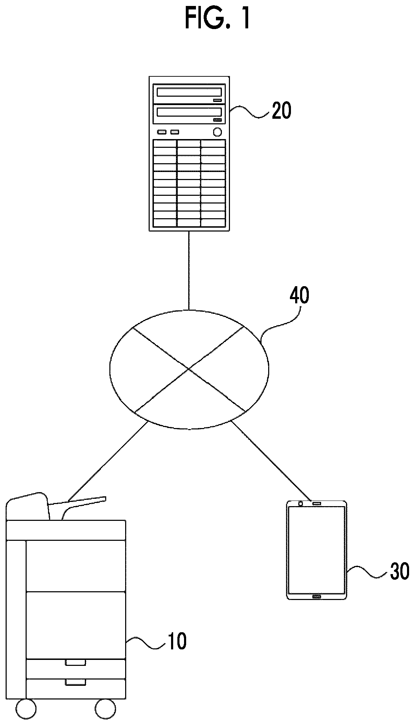

Hereinafter, an exemplary embodiment for embodying the technique of the present disclosure will be described in detail with reference to the drawings. Fig. 1 is a diagram showing a system configuration of a fax sorting system according to an exemplary embodiment.

As shown in Fig. 1, the fax sorting system according to the present exemplary embodiment is configured with an image forming apparatus 10, a cloud server 20, and a user terminal 30.

The image forming apparatus 10 is a so-called multifunctional apparatus including a plurality of functions such as a copy function, a print function, a fax function, and a scan function. The image forming apparatus 10 is an example of an information processing system in the technology of the present disclosure.

The cloud server 20 is a server for storing and managing fax data received from the image forming apparatus 10. The cloud server 20 is an example of an external device in the technology of the present disclosure. The cloud server 20 is connected to the image forming apparatus 10 via an Internet 40.

The user terminal 30 is a terminal for checking the fax data stored in the cloud server 20. As the user terminal 30, for example, a smartphone, a personal computer, or the like can be used. The user terminal 30 is connected to the cloud server 20 via the Internet 40.

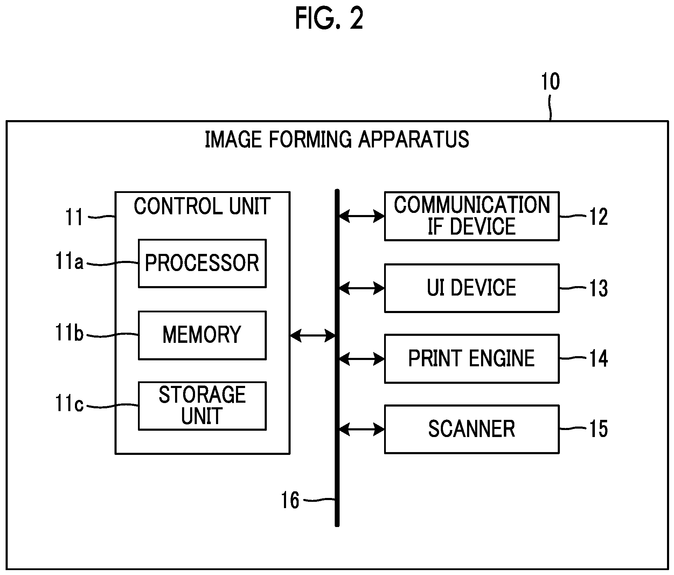

Next, a hardware configuration of the image forming apparatus 10 according to the present exemplary embodiment will be described. Fig. 2 is a block diagram showing a hardware configuration of the image forming apparatus 10.

As shown in Fig. 2, the image forming apparatus 10 includes a control unit 11, a communication interface (abbreviated as IF) device 12, a user interface (abbreviated as UI) device 13, a print engine 14, and a scanner 15. The components are connected to each other via a control bus 16.

The control unit 11 includes a processor 11a, a memory 11b, and a storage unit 11c. The processor 11a executes predetermined processing based on a program read out from the storage unit 11c and developed in the memory 11b. The storage unit 11c is configured with, for example, a ROM, an HDD, or an SSD. Various programs, data, and the like are stored in the storage unit 11c.

In the present exemplary embodiment, the processor 11a is described as a processor that reads out and executes the program stored in the storage unit 11c, but the present disclosure is not limited thereto. The program may be provided in a form recorded on a recording medium readable by a computer as described above. In addition, the program may be acquired from an external device via a communication line.

The communication IF device 12 transmits and receives data to and from an external device or the like. The UI device 13 is, for example, a device for the user to receive or input information, such as a touch panel and/or a button. The print engine 14 prints an image on a recording medium such as printing paper through steps such as charging, exposure, development, transfer, and fixing. The print engine 14 is an example of a printing apparatus in the technology of the present disclosure. The scanner 15 scans a document loaded in the image forming apparatus 10 as image data.

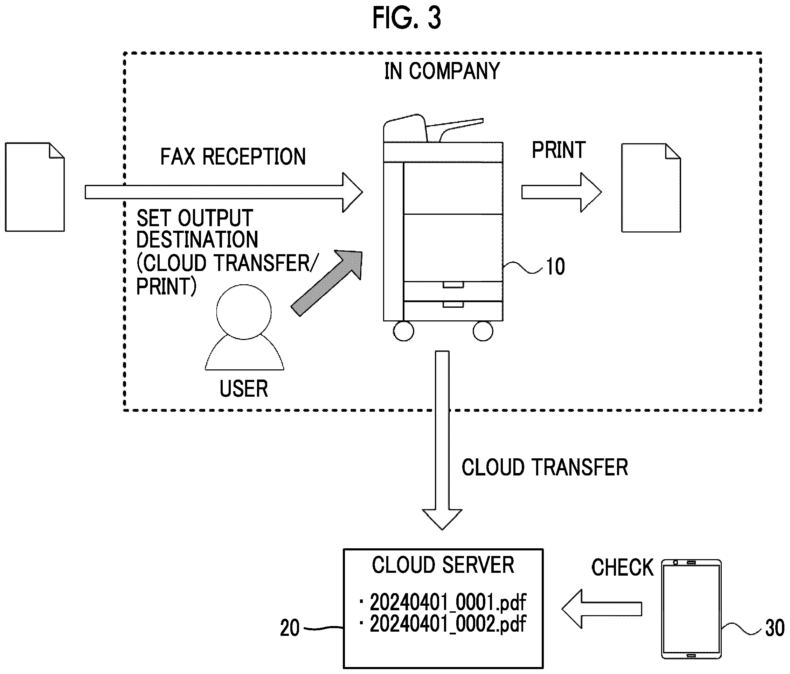

As shown in Fig. 3, in the fax sorting system according to the present exemplary embodiment, regarding the output destination of the fax data received by the image forming apparatus 10, the user sets in advance whether to print the data or upload the data to the cloud server 20. Here, the setting of the output destination of the fax data is performed via the user interface device 13 of a main body of the image forming apparatus 10.

In a case where the image forming apparatus 10 receives fax data, the control unit 11 of the image forming apparatus 10 prints the fax data or uploads the fax data to the cloud server 20 in accordance with the setting of the output destination of the fax data.

With the configuration as above, for example, in a case where the user is in the company where the image forming apparatus 10 is installed, the fax data can be printed and checked. In addition, in a case where the user is outside the company, the fax data can be checked by accessing the cloud server 20 from the user terminal 30.

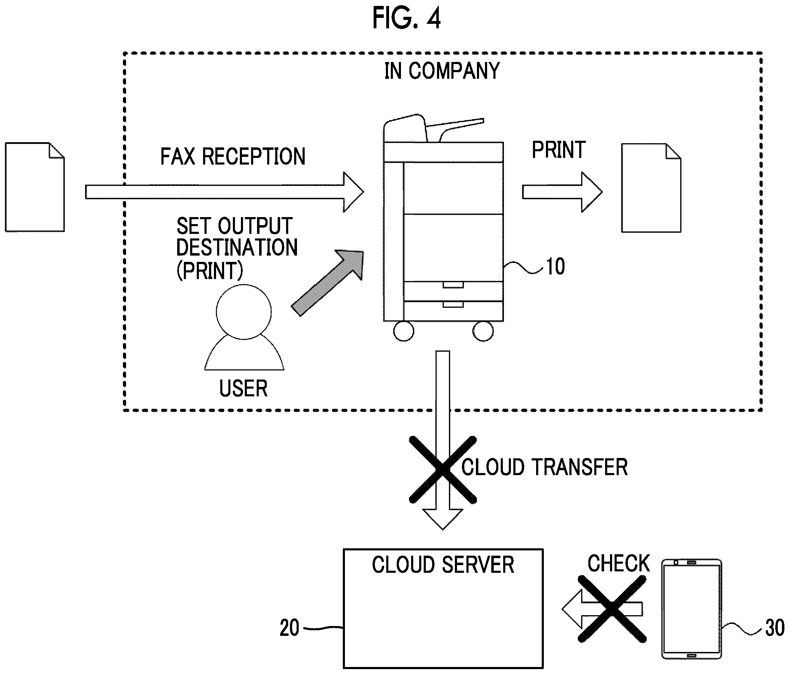

However, as shown in Fig. 4, in a case where the user goes out in a state where the received fax data is set to be printed, the user cannot check the content of the fax from the outside of the company via the cloud. There is a problem in security in that access from the outside of the company to the image forming apparatus installed in the company is received and the setting of the image forming apparatus can be remotely changed from the outside of the company.

In order to address such a problem, in a case where instruction information for providing an instruction to set the output destination of the received fax data to any one of printing using the image forming apparatus 10 (specifically, the print engine 14) or upload to the cloud server 20 (that is, cloud transfer) is included in the received fax data, the control unit 11 in the image forming apparatus 10 sets the output destination of the fax data received from the outside according to the instruction provided by the instruction information.

Hereinafter, a fax for transmitting the instruction information may be described as a fax for control. In addition, data of the fax for control may be described as fax data for control.

In the fax sorting system according to the present exemplary embodiment, the instruction information is included in the fax data as an image. The instruction information may be included in the fax data as a one-dimensional code image or a two-dimensional code image, or may be included in the fax data as a text image.

The instruction information can be described in a specific description language that can be recognized by the image forming apparatus 10. For example, in a case where the output destination of the data is subject to cloud transfer, it is described as "Action: ChangeExecuteMode to CloudTransfer" or the like. In addition, in a case where the output destination of the data is printed, it is described as "Action: ChangeExecuteMode to print" or the like.

The method of describing the instruction information is not limited to the above, and any description method may be used.

The control unit 11 acquires the instruction information by decoding an image included in the fax data by a decoding method corresponding to a recording method of the instruction information. In a case where the instruction information can be acquired by decoding the image included in the fax data, the control unit 11 processes the fax data as the fax data for control. In addition, in a case where the instruction information cannot be acquired by decoding the image included in the fax data, the control unit 11 processes the fax data as normal fax data.

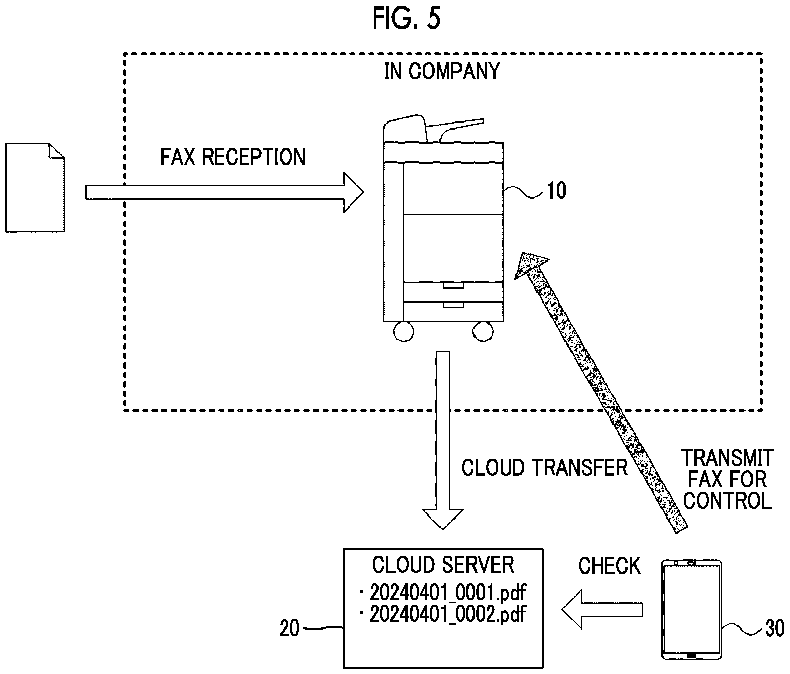

As shown in Fig. 5, in the fax sorting system according to the present exemplary embodiment, the user may change the output destination of the fax data even from the outside of the company by transmitting the fax for control to the image forming apparatus 10, for example, by using an application for fax or the like installed in the user terminal 30.

In the fax sorting system according to the present exemplary embodiment, the control unit 11 may validate only the instruction information included in the fax data received from a transmission source registered in advance. Here, the transmission source registered in advance is a person to whom use of the fax for control is permitted. Hereinafter, the transmission source registered in advance may be described as a user of the fax for control.

The control unit 11 may decode all the fax data and validate only the instruction information included in the fax data received from the user of the fax for control. In addition, the control unit 11 may perform decoding only on the fax data received from the user of the fax for control.

In addition, the control unit 11 may set the output destination of the data received from the outside according to an instruction provided by the instruction information included in the fax data received from the transmission source registered in advance, and notify the transmission source of a setting result.

In addition, for example, in a case where information indicating the fax data for control is included in fax reception information such as an F code, a sub-address, or an extension area of a facsimile protocol, the control unit 11 may treat the received fax data as the fax for control.

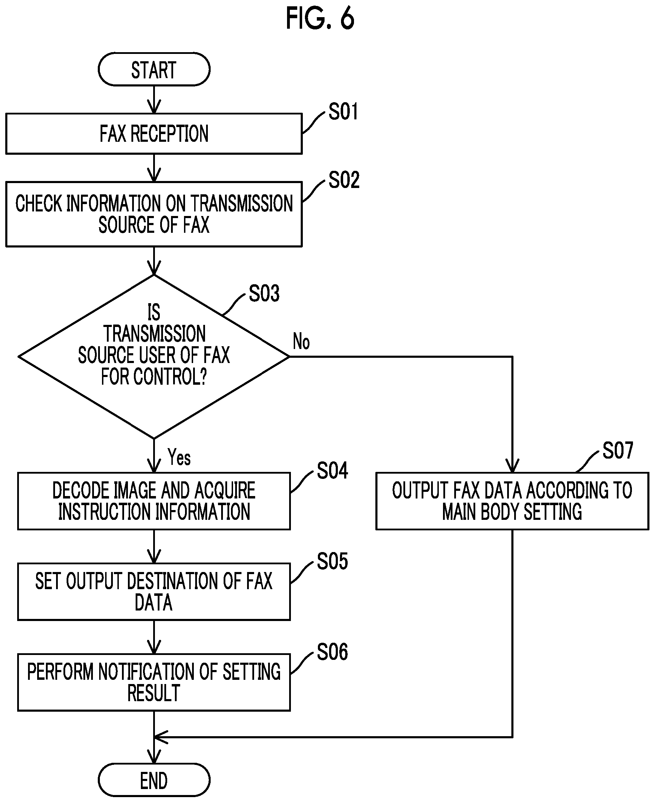

Next, a flow of processing in a case of fax reception in the image forming apparatus 10 will be described with reference to a flowchart of Fig. 6.

First, in step S01, the control unit 11 of the image forming apparatus 10 receives the fax data.

Next, in step S02, the control unit 11 checks information on transmission source of the fax data.

Next, in step S03, the control unit 11 determines whether or not the transmission source of the fax data is the user of the fax for control.

In step S03, in a case where it is determined that the transmission source of the fax data is the user of the fax for control, the control unit 11 decodes the image of the fax data and acquires the instruction information in step S04.

Next, in step S05, the control unit 11 sets the output destination of the fax data according to the instruction information.

Next, in step S06, the control unit 11 notifies the transmission source of the fax data received in step S01 of the setting result of the output destination of the fax data according to the instruction information, and ends the processing.

In a case where it is determined in step S03 that the transmission source of the fax data is not the user of the fax for control, the control unit 11 outputs the fax data received in step S01 according to the setting content of the output destination of the fax data set in the main body of the image forming apparatus 10 in step S07, and ends the processing.

### [Modification Examples]

Although the fax sorting system according to an exemplary embodiment of the present disclosure has been described above, the technology of the present disclosure is not limited to the above exemplary embodiment and can be appropriately changed.

For example, the data which is received by the image forming apparatus 10 and of which the output destination is sorted is not limited to fax data, and may be any data such as mail data.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, in the technology of the present disclosure, the system includes both a system configured with a plurality of devices and a system configured with a single device.

In addition, the technology of the present disclosure can also be applied to a program and a program product.

### [Supplementary Notes]

Regarding the exemplary embodiments described above, the following supplementary notes are further disclosed.
(((1))) An information processing system comprising:
   a processor configured to:
   set, in a case where instruction information for providing an instruction to set an output destination of received data to any one of printing using a printing apparatus or upload to an external device is included in received fax data, the output destination of the data received from an outside according to the instruction provided by the instruction information.
(((2))) The information processing system according to (((1))), wherein the processor is configured to:
   validate only instruction information included in fax data received from a transmission source registered in advance.
(((3))) The information processing system according to (((2))), wherein the processor is configured to:
   set the output destination of the data received from the outside according to an instruction provided by the instruction information included in the fax data received from the transmission source registered in advance; and
   notify the transmission source of a setting result.
(((4))) The information processing system according to any one of (((1))) to (((3))),
   wherein the instruction information is included in the fax data as an image.
(((5))) The information processing system according to (((4))),
   wherein the instruction information is included in the fax data as a one-dimensional code image or a two-dimensional code image.
(((6))) The information processing system according to (((4))),
   wherein the instruction information is included in the fax data as a text image.
(((7))) A program that causes a computer to execute a step of:
   setting, in a case where instruction information for providing an instruction to set an output destination of received data to any one of printing using a printing apparatus or upload to an external device is included in received fax data, the output destination of the data received from an outside according to the instruction provided by the instruction information.

The effects of the configuration of the supplementary note will be described below.

With the information processing system according to (((1))), it is possible to remotely change the output destination of the received data.

With the information processing system according to (((2))), it is possible only for a permitted user to change the output destination of the data.

With the information processing system according to (((3))), it is possible to notify the user, who provides the instruction for the setting, of the setting result.

With the information processing system according to (((4))), it is possible to change the output destination of the data by using a general fax.

With the information processing system according to (((5))), it is possible to change the output destination of the data by using the one-dimensional code image or the two-dimensional code image.

With the information processing system according to (((6))), it is possible to change the output destination of the data by using the text image.

With the program according to (((7))), it is possible to remotely change the output destination of the received data.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
11: control unit
11a: processor
11b: memory
11c: storage unit
12: communication interface device
13: user interface device
14: print engine
15: scanner
16: control bus
20: cloud server
30: user terminal
40: Internet

## Claims

1. An information processing system comprising:
a processor configured to:
set, in a case where instruction information for providing an instruction to set an output destination of received data to any one of printing using a printing apparatus or upload to an external device is included in received fax data, the output destination of the data received from an outside according to the instruction provided by the instruction information.

2. The information processing system according to claim 1, wherein the processor is configured to:
validate only instruction information included in fax data received from a transmission source registered in advance.

3. The information processing system according to claim 2, wherein the processor is configured to:
set the output destination of the data received from the outside according to an instruction provided by the instruction information included in the fax data received from the transmission source registered in advance; and
notify the transmission source of a setting result.

4. The information processing system according to any one of claims 1 to 3,
wherein the instruction information is included in the fax data as an image.

5. The information processing system according to claim 4,
wherein the instruction information is included in the fax data as a one-dimensional code image or a two-dimensional code image.

6. The information processing system according to claim 4,
wherein the instruction information is included in the fax data as a text image.

7. A program that causes a computer to execute a step of:
setting, in a case where instruction information for providing an instruction to set an output destination of received data to any one of printing using a printing apparatus or upload to an external device is included in received fax data, the output destination of the data received from an outside according to the instruction provided by the instruction information.

8. An information processing method comprising:
setting, in a case where instruction information for providing an instruction to set an output destination of received data to any one of printing using a printing apparatus or upload to an external device is included in received fax data, the output destination of the data received from an outside according to the instruction provided by the instruction information.
